# EUROPÄISCHE PATENTSCHRIFT

(11) **EP 3 134 308 B1**
(45) Veröffentlichungstag und Bekanntmachung des Hinweises auf die Patenterteilung: **17.10.2018**
(21) Anmeldenummer: 15713947.8
(22) Anmeldetag: 10.04.2015
(51) Int. Cl.: B62D 1/185, B62D 1/20, B62D 3/12, B62D 5/04, B62D 5/06, F16D 3/06, F16C 3/03

(54) **LENKWELLE FÜR EIN KRAFTFAHRZEUG**
STEERING COLUMN FOR A VEHICLE
COLONNE DE DIRECTION POUR VEHICULE

(30) Priorität: 25.04.2014 DE 102014105822
(43) Veröffentlichungstag der Anmeldung: 01.03.2017
(73) Patentinhaber: ThyssenKrupp Presta AG, 9492 Eschen (LI); thyssenkrupp AG, 45143 Essen (DE)
(72) Erfinder: JÄGER, Bernhard, 88239 Wangen im Allgäu (DE); DUROT, Janick, 9435 Heerbrugg (CH); BREUER, Marius, 6900 Lochau (AT)
(74) Vertreter: thyssenkrupp Intellectual Property GmbH
(86) Internationale Anmeldenummer: PCT/EP2015/057814
(87) Internationale Veröffentlichungsnummer: WO 2015/162019

(56) Entgegenhaltungen:
- EP-A2- 2 281 731
- EP-A2- 2 282 071

## Beschreibung

### Technisches Gebiet

Die vorliegende Erfindung betrifft eine Lenkwelle für ein Kraftfahrzeug, umfassend einen ersten Wellenteil und einen gegenüber diesem teleskopierbaren zweiten Wellenteil.

### Stand der Technik

Teleskopierbare Lenkwellen für Kraftfahrzeuge sind bekannt, bei welchen eine innere Spindel und eine dazu komplementäre, koaxial zur inneren Spindel angeordnete äußere Spindel vorgesehen sind, welche relativ zueinander teleskopierbar sind. Auf diese Weise lässt sich bei Kraftfahrzeugen eine positionsverstellbare Lenksäule darstellen, mittels welcher die Lenkradposition zumindest in Axialrichtung der Lenkwelle an die jeweilige Fahrerposition angepasst werden kann, um entsprechend die Ergonomie für den Fahrer des Kraftfahrzeugs und damit die Sicherheit zu verbessern. Teleskopierbare Lenkwellen sind weiterhin für Sicherheitslenksäulen bekannt, bei welchen sich die Lenkwelle im Crash-Falle verkürzt beziehungsweise zurückweicht, beispielsweise dadurch, dass der Fahrer auf dem Lenkrad auftrifft und das Lenkrad dann zusammen mit der Lenkwelle zurückschiebt.

Teleskopierbare Lenkwellen werden in Kraftfahrzeugen zwischen dem Lenkgetriebe und dem Lenkrad eingesetzt und sollen neben der Positionseinstellung und Crashsicherheit auch geringfügige Änderungen des Abstandes zwischen dem Lenkgetriebe und der Lenksäule kompensieren, die beispielsweise aufgrund dynamischer Belastungen im Fahrbetrieb durch die entsprechenden Verwindungen des Chassis auftreten, aber auch durch Bewegungen des Lenkgetriebes in einer Gummilagerung. Auch diese geringfügigen Änderungen des Abstands sollen möglichst geräuscharm und für den Fahrer nicht spürbar durch die teleskopierbare Lenkwelle kompensiert werden.

Eine solche teleskopierbare Lenkwelle kann beispielsweise als Lenkspindel in einer Lenksäule und/oder als Lenkzwischenwelle zwischen der Lenkspindel und einem Lenkgetriebe ausgebildet sein.

Die Lenkwelle mit dem Teleskopmechanismus soll neben einer leichtgängigen und ruckfreien Axialverstellung auch eine möglichst hysteresefreie Übertragung des Lenkdrehmoments zwischen der inneren Spindel und der äußeren Spindel bereitstellen, so dass der Fahrer zum einen keinen Unterschied feststellen kann, zwischen einem Lenkausschlag in die eine Richtung und einem Lenkausschlag in die andere Richtung, und zum anderen ein mögliches Spiel bei der Übertragung des Drehmoments zwischen der inneren Spindel und der äußeren Spindel durch den Fahrer nicht wahrgenommen wird.

Um beim Teleskopieren der Lenkwelle zum Verstellen der Lenkradposition ein möglichst gutes Verschiebegefühl für den Fahrer bereitzustellen, ist es gewünscht, insbesondere einen Stick-Slip-Effekt, also ein anfängliches Anhaften und plötzliches Losbrechen der Teile gegeneinander, zu verringern beziehungsweise weitgehend zu vermeiden, um ein flüssiges und geräuscharmes Verstellen der Position des Lenkrades zu ermöglichen. Weiterhin sollen so Geräusche vermindert beziehungsweise vermieden werden, welche durch das Eintragen von Vibrationen im Fahrbetrieb erzeugt werden. Auch aus diesem Grund soll der Stick-Slip-Effekt reduziert beziehungsweise vermieden werden, durch welchen aufgrund des häufigen Losbrechens beim Vibrationseintrag während des Fahrbetriebes ebenfalls Geräusche entstehen können.

Hierzu sind aus dem Stand der Technik Gleithülsen bekannt, welche zwischen der inneren Spindel und der äußeren Spindel angeordnet werden, und welche dazu dienen, die Reibung zwischen der inneren Spindel und der äußeren Spindel beim Teleskopieren zu verringern. Eine solche Gleithülse ist beispielsweise aus der WO2010/037509 A1 bekannt, welche eine Gleithülse mit dauerhaft verbesserten Gleiteigenschaften darstellt.

Aus der JP 2005-180631 A ist eine Schiebewellenverbindung bekannt, bei welcher eine auf die Innenwelle aufgebrachte Verzahnung Zähne mit zwei unterschiedlichen Geometrien aufweist, so dass im lastfreien Zustand, also ohne Aufbringen eines Lenkmoments, nicht alle Zähne im Eingriff mit der Außenwelle stehen. Diese unterschiedlichen Verzahnungsgeometrien auf der Innenwelle sind sehr aufwändig herzustellen und erfordern besonders hohe Toleranzgenauigkeiten.

Aus der EP 2 090 493 B1 ist eine Fahrzeuglenkwelle und eine Fahrzeuglenkvorrichtung bekannt, bei welcher elastische Verbindungselemente in sich in Wellenrichtung erstreckende Nuten der Innenwelle eingeklebt sind. Auch eine solche Lenkwelle ist aufwändig herzustellen.

Aus der EP 2 282 071 A2 ist eine Lenkwelle für ein Kraftfahrzeug bekannt, umfassend einen ersten Wellenteil und einen gegenüber diesem teleskopierbaren zweiten Wellenteil, wobei der erste Wellenteil mindestens einen Verzahnungsbereich mit mindestens einem mit dem zweiten Wellenteil formschlüssig in Eingriff stehenden Führungselement zum Führen des ersten Wellenteils gegenüber dem zweiten Wellenteil beim Teleskopieren und mit mindestens einem mit dem zweiten Wellenteil über einen losen Formschluss in Eingriff stehenden Übertragungselement zum Übertragen eines Drehmoments aufweist, wobei der Verzahnungsbereich zumindest teilweise mit einem Kunststoff umspritzt ist und das Führungselement in der Umspritzung ausgebildet ist.

### Darstellung der Erfindung

Ausgehend von dem bekannten Stand der Technik ist es eine Aufgabe der vorliegenden Erfindung, eine teleskopierbare Lenkwelle bereitzustellen, welche eine hohe Verdrehsteifigkeit bei einer geringen Verschiebekraft aufweist und gleichzeitig einfacher herstellbar ist.

Diese Aufgabe wird durch eine Lenkwelle mit den Merkmalen des Anspruchs 1 gelöst. Vorteilhafte Weiterbildungen ergeben sich aus den Unteransprüchen.

Entsprechend wird eine Lenkwelle für ein Kraftfahrzeug vorgeschlagen, umfassend einen ersten Wellenteil und einen gegenüber diesem teleskopierbaren zweiten Wellenteil, wobei der erste Wellenteil mindestens einen Verzahnungsbereich mit mindestens einem mit dem zweiten Wellenteil formschlüssig in Eingriff stehenden Führungselement zum Führen des ersten Wellenteils gegenüber dem zweiten Wellenteil beim Teleskopieren und mit mindestens einem mit dem zweiten Wellenteil über einen losen Formschluss in Eingriff stehenden Übertragungselement zum Übertragen eines Drehmoments aufweist, wobei der Verzahnungsbereich zumindest teilweise mit einem Kunststoff umspritzt und das Führungselement ist in der Umspritzung ausgebildet ist. Der Verzahnungsbereich weist erfindungsgemäß eine Verzahnung mit Zähnen gleicher Geometrie auf, wobei mindestens ein Fehlzahn vorgesehen ist, an dessen Position das Führungselement durch die Umspritzung ausgebildet ist.

Dadurch, dass der erste Wellenteil mit einem Kunststoff umspritzt ist und das Führungselement in der Umspritzung ausgebildet ist, kann die erforderliche geringe Verschiebekraft zum Teleskopieren entlang der Wellenrichtung erreicht werden, da im lastfreien Zustand, also ohne das Aufbringen eines Drehmoments auf die Lenkwelle, ein formschlüssiger Kontakt zwischen dem ersten Wellenteil und dem zweiten Wellenteil nur über das aus Kunststoff ausgebildete Führungselement stattfindet, welches mit dem zweiten Wellenteil formschlüssig in Eingriff steht. Die Übertragungselemente hingegen stehen nur über einen losen Formschluss mit dem zweiten Wellenteil in Eingriff, so dass hier eine nur sehr geringe oder sogar keine Reibung auftritt, da ein Kontakt zwischen den Übertragungselementen und dem zweiten Wellenteil nicht auftritt. Weiterhin tritt hier nur eine Reibung zwischen Kunststoff und Metall auf, wobei über die Auswahl des Kunststoffes ein besonders bevorzugtes Reibverhalten erreicht werden kann.
Zur Übertragung eines Drehmoments vom ersten Wellenteil zum zweiten Wellenteil unter Ausbildung einer hohen Verdrehsteifigkeit kommen dann die am ersten Wellenteil vorgesehenen Übertragungselemente mit dem zweiten Wellenteil in Eingriff, sobald eine geringe Relativrotation zwischen dem ersten Wellenteil und dem zweiten Wellenteil stattgefunden hat und durch den losen Formschluss zwischen den Übertragungselementen und den dazu komplementären Strukturen im zweiten Wellenteil ausgebildete Luftspalt überwunden ist. Zur Übertragung eines Drehmoments stehen dann im Wesentlichen alle Übertragungselemente zur Verfügung, so dass ein Drehmoment beziehungsweise ein Lenkmoment mit einer hohen Verdrehsteifigkeit mittels der vorgeschlagenen Lenkwelle übertragen werden kann. Auch die Führungselemente tragen zur Drehmomentübertragung bei, wobei der Beitrag abhängig von der jeweiligen Elastizität des Kunststoffmaterials beziehungsweise des Führungselements ist. Ist das Führungselement sehr elastisch, so ist der Beitrag zum Übertragen des Drehmoments gering und die Übertragungselemente kommen bereits bei geringen Relativrotationen zwischen dem ersten und dem zweiten Wellenteil in Eingriff mit den dazu komplementären Strukturen im zweiten Wellenteil.

Dadurch, dass der erste Wellenteil mit einem Kunststoff umspritzt ist, lässt sich dieser auch auf einfache Weise herstellen. Auf die aufwändige Ausbildung von Zähnen mit unterschiedlichen Geometrien in dem metallischen ersten Wellenteil kann entsprechend verzichtet werden. Die Umspritzung beziehungsweise Ausformung von Kunststoff ist bedeutend einfacher durchzuführen, als eine Umformung oder spanende Bearbeitung des metallischen Grundkörpers des ersten Wellenteils. Weiterhin sind die zur Ausbildung der Umspritzung notwendigen Spritzformen deutlich einfacher und kostengünstiger herzustellen, als mögliche Umformwerkzeuge.

Der Verzahnungsbereich ist bevorzugt metallisch ausgebildet, wobei der erste und der zweite Wellenteil bevorzugt metallisch ausgebildet sind und beispielsweise durch Umformen, beispielsweise durch Kaltfließpressen, Rundkneten, Strangpressen oder Axialformen, oder spanende Bearbeitung hergestellt sind.

Bevorzugt ist der Verzahnungsbereich um den Umfang des ersten Wellenteils herum mit dem Kunststoff umspritzt. Entsprechend kann auf diese Weise auch beim Vorliegen eines geringen Drehmoments immer noch eine günstige Verschiebekraft bewirkt werden, da der gesamte Verzahnungsbereich umspritzt ist und damit die auf diese Weise ausgebildeten Kunststoffoberflächen der Umspritzung des ersten Wellenteils an den Metalloberflächen der dazu komplementären Strukturen des zweiten Wellenteils reiben. Auf diese Weise kann das Auftreten eines Stick-Slip-Effekts reduziert beziehungsweise ganz vermieden werden, so dass sich für den Fahrer ein harmonisches Verschiebegefühl in Richtung der Wellenachse ergibt. Weiterhin kann das Geräuschniveau auf diese Weise reduziert werden.

Bevorzugt ist im Verzahnungsbereich des ersten Wellenteils eine gleichmäßige Verzahnung mit Zähnen gleicher Geometrie vorgesehen und mindestens ein Zahn ist zur Ausbildung mindestens eines Führungselements mit der Umspritzung versehen. Im Sinne der Erfindung wird unter einer gleichmäßigen Verzahnung eine regelmäßige Verzahnung verstanden, bei der alle Zähne gleiche Abstände und Formen aufweisen. Die Bezeichnungen regelmäßig und gleichmäßig werden entsprechend als Synonyme verwendet. Durch die Ausbildung einer gleichmäßigen Verzahnung mit Zähnen gleicher Geometrie kann eine einfache und zuverlässige Herstellung bei gleichzeitig vorliegender hoher Funktionssicherheit durch die Ausbildung eines funktionssicheren losen Formschlusses erreicht werden. Besonders bevorzugt ist durch die Umspritzung der regelmäßigen Verzahnung eine Beschichtung des Verzahnungsbereichs ausgebildet, wobei die Beschichtung im Bereich mindestens eines Führungselements dicker ausgebildet ist, als im Bereich mindestens eines Übertragungselements. So können auf besonders einfache und sehr zuverlässige Weise die Führungselemente und die Übertragungselemente ausgebildet werden, wobei die strukturelle Integrität der jeweiligen Elemente der Kunststoffbeschichtung durch die darunter angeordneten metallischen Zähne des Verzahnungsbereich gegeben ist. Von außen gesehen, erscheint die Verzahnung durch die unterschiedliche Dicke der Beschichtung ungleichmäßig. Prinzipiell ist es auch denkbar und möglich, die Dicke der Umspritzung am Umfang verteilt gleichmäßig auszugestalten und die darunter liegende, bevorzugt metallische, ungleichmäßig auszubilden, um auf diese Weise Führungselemente und Übertragungselemente zu schaffen. In diesem Fall muss die Umspritzung die entsprechend notwendige Elastizität, zumindest im Bereich der Führungselemente aufweisen.

In einer Weiterbildung der Lenkwelle weist der Verzahnungsbereich eine Verzahnung mit Zähnen gleicher Geometrie auf, wobei mindestens ein Fehlzahn vorgesehen ist, an dessen Position das Führungselement in der Umspritzung ausgebildet ist. Auch ein solcher Verzahnungsbereich kann einfach hergestellt werden, denn die Ausbildung eines Fehlzahns stellt keine besonderen Anforderungen an die zu verwendenden Werkzeuge. Durch die Ausbildung des Führungselements an der Position des Fehlzahns kann das Führungselement mit einem größeren Volumen an Kunststoffmaterial ausgebildet werden, als es dies beim Bereitstellen einer Beschichtung von Zähnen gleicher Geometrie der Fall ist. Aufgrund des größeren Kunststoffvolumens zur Ausbildung des Führungselements kann die Elastizität des Führungselements über einen weiteren Bereich hinweg variiert und auf den jeweiligen Anwendungsfall angepasst werden.

Bevorzugt weist das Führungselement in seinem Zahnkopfbereich eine sich in Richtung der Wellenachse des ersten Wellenelements erstreckende Ausnehmung zur Ausbildung zweier unabhängig voneinander federnden Flanken zur elastischen Anlage des Führungselements an einer komplementären Struktur des zweiten Wellenteils auf.

Durch die vorgenannten Strukturen kann die leichte Relativrotation zwischen dem ersten Wellenteil und dem zweiten Wellenteil zum Anlegen der Übertragungselemente an die jeweilige dazu komplementäre Struktur zum verdrehsteifen Übertragen des Drehmoments ermöglicht werden. Das Führungselement nimmt dabei nicht oder nur unwesentlich an der Übertragung des Drehmoments teil.

Bevorzugt ist zwischen dem ersten Wellenteil und dem zweiten Wellenteil ein loser Formschluss zur Übertragung eines Drehmoments auch bei Fortfall der Umspritzung ausgebildet, wobei hier besonders bevorzugt über eine metallische Verzahnung des ersten Wellenteils gegenüber einer dazu komplementären Struktur im zweiten Wellenteil der lose Formschluss bereitgestellt wird. So kann eine Drehmomentübertragung auch dann stattfinden, wenn die Umspritzung aus Kunststoff nicht mehr vorhanden ist. Auf diese Weise kann eine erhöhte Sicherheit der Lenkwelle bereitgestellt werden, da auch bei einer vollständigen Abnutzung beziehungsweise einer Zerstörung der Kunststoffumspritzung Lenkmanöver des Kraftfahrzeuges noch ausgeführt werden können.

Eine Verringerung der Verschiebekräfte kann erreicht werden, wenn das Führungselement eine Oberflächengeometrie zur Ausbildung von Punktkontakten oder eine Oberflächengeometrie zur Ausbildung von Linienkontakten mit einer komplementären Struktur des zweiten Wellenelements aufweist. Die Umspritzung ermöglicht die Ausbildung entsprechender Strukturen auf einfache Weise durch die Gestaltung des Spritzwerkzeugs.

Zur Ausbildung einer symmetrischen Struktur sind mindestens zwei, drei oder vier Führungselemente gleichmäßig um den Umfang des Verzahnungsbereichs herum verteilt angeordnet und zwischen zwei Führungselementen ist jeweils mindestens ein Übertragungselement angeordnet. So kann im lastfreien Zustand die Verschiebbarkeit weiter verbessert werden. Durch eine möglichst geringe Anzahl an Führungselementen kann die notwendige Verschiebekraft zum Teleskopieren des ersten Wellenteils gegenüber dem zweiten Wellenteil gering gehalten werden. Durch die symmetrische Anordnung kann weiterhin erreicht werden, dass eine sichere Führung des ersten Wellenteils gegenüber dem zweiten Wellenteil so erreicht wird, dass ein Verkanten oder das Auftreten von Klappergeräuschen oder Vibrationen reduziert oder vermieden werden kann.

Der für die Umspritzung gewählte Kunststoff ist bevorzugt ein elastischer Kunststoff, derart, dass das Führungselement im lastfreien Zustand stets in seine Ausgangsform zurückkehrt und damit aufgrund des Formschlusses zwischen dem ersten und dem zweiten Wellenteil über die Vorspannung quasi eine Neutralstellung der beiden Wellenteile zueinander bereitstellt. Entsprechend tritt eine reduzierte beziehungsweise keine Hysterese auf und der Fahrer nimmt im Normalbetrieb beim Eintragen eines Lenkmoments nicht wahr, dass zunächst unter elastischer Verformung des Führungselements der durch den losen Formschluss ausgebildete Luftspalt zwischen den Übertragungselementen und dem zweiten Wellenteil überwunden werden muss, bevor eine steife Lenkverbindung bereitgestellt ist.

Die Kunststoffumspritzung stellt bevorzugt eine Beschichtung der Verzahnung des ersten Wellenteiles in den Bereichen bereit, in welchen die Übertragungselemente ausgebildet sind. In den Bereichen, in welchen die Führungselemente ausgebildet sind, ist diese Beschichtung bevorzugt dicker ausgebildet, derart, dass ein Formschluss der Führungselemente mit den dazu komplementären Strukturen im zweiten Wellenteil gewährleistet ist. Die Anlage kann je nach Geometrie der Führungselemente über einen Flächenkontakt oder einen Linienkontakt oder, bei einer entsprechend wellenförmigen Ausbildung des Führungselements, auch ein Punktkontakt sein. Zur Verringerung beziehungsweise Vermeidung des Stick-Slip-Effektes ist bevorzugt ein linienförmiger oder punktförmiger Kontakt zwischen dem am ersten Wellenteil vorgesehenen Führungselement und dem zweiten Wellenteil vorgesehen.

Entsprechend können die aus Metall bestehenden ersten und zweiten Wellenteile einfach geformt werden und die Ausbildung der Führungselemente, welche beispielsweise durch einen größeren Zahn bereitgestellt werden, kann durch die Umspritzung mit Kunststoff bewerkstelligt werden, so dass insgesamt eine vereinfachte Herstellbarkeit resultiert.

Der erste Wellenteil ist bevorzugt eine Innenwelle, auf welcher eine Verzahnung aufgebracht ist, und der zweite Wellenteil ist bevorzugt eine Außenwelle, welche eine im Wesentlichen zylinderförmige Aufnahme zum Aufnehmen der Innenwelle aufweist, und auf der zylinderförmigen Innenseite eine entsprechend zur Verzahnung der Innenwelle komplementäre Verzahnung vorgesehen ist.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Darstellung einer Kraftfahrzeuglenkung mit einer Hilfskraftunterstützung;
- Figur 2: eine schematische perspektivische Darstellung einer teleskopierbaren Lenkwelle;
- Figur 3: eine schematische perspektivische Darstellung einer Lenkwelle in einer auseinandergezogenen Darstellung;
- Figur 4: eine schematische Schnittdarstellung durch eine Lenkwelle in einem ersten Ausführungsbeispiel;
- Figur 5: eine Detaildarstellung aus Figur 4;
- Figur 6: eine schematische Schnittdarstellung durch eine Lenkwelle in einem zweiten Ausführungsbeispiel; und
- Figur 7: eine Detaildarstellung aus Figur 6.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

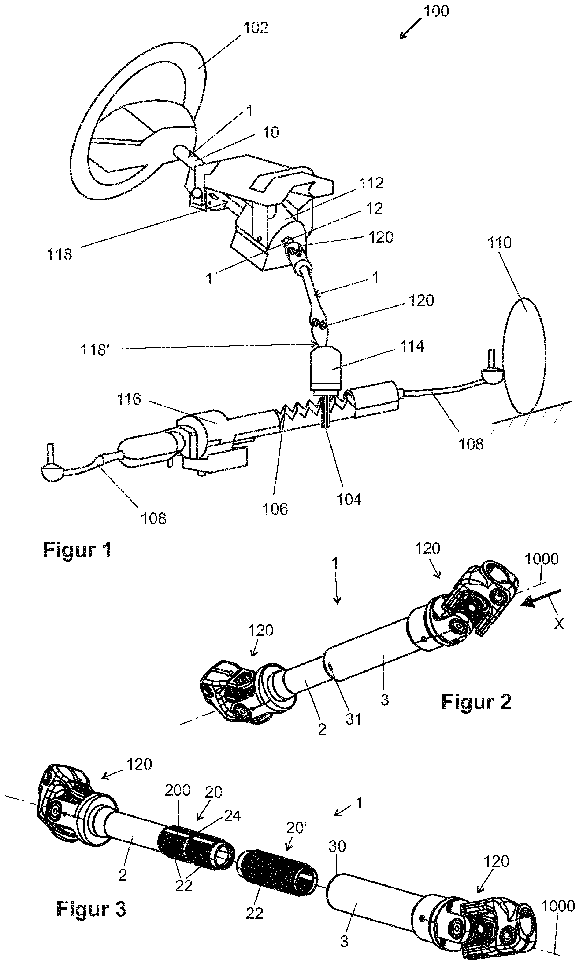

In Figur 1 ist eine schematische Darstellung einer Kraftfahrzeuglenkung 100 gezeigt, wobei ein Fahrer über ein Lenkrad 102 ein entsprechendes Drehmoment als Lenkbefehl in eine Lenkwelle 1 einbringen kann. Das Drehmoment wird dann über die Lenkwelle 1 auf ein Lenkritzel 104 übertragen, welches mit einer Zahnstange 106 kämmt, die dann ihrerseits über entsprechende Spurstangen 108 den vorgegebenen Lenkwinkel auf die lenkbaren Räder 110 des Kraftfahrzeugs überträgt.

Eine elektrische und/oder hydraulische Hilfskraftunterstützung kann in Form der mit der Lenkwelle 1 gekoppelten Hilfskraftunterstützung 112, der mit dem Ritzel 104 gekoppelten Hilfskraftunterstützung 114 und/oder der mit der Zahnstange 106 gekoppelten Hilfskraftunterstützung 116 vorgesehen sein. Die jeweilige Hilfskraftunterstützung 112, 114 oder 116 trägt ein Hilfsdrehmoment in die Lenkwelle 1, das Lenkritzel 104 und/oder eine Hilfskraft in die Zahnstange 106 ein, wodurch der Fahrer bei der Lenkarbeit unterstützt wird. Die drei unterschiedlichen in der Figur 1 dargestellten Hilfskraftunterstützungen 112, 114 und 116 zeigen mögliche Positionen für deren Anordnung.

Üblicher Weise ist nur eine einzige der gezeigten Positionen mit einer Hilfskraftunterstützung belegt. Das Hilfsdrehmoment oder die Hilfskraft, welches beziehungsweise welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten Eingangsdrehmoments bestimmt. Alternativ oder in Kombination mit der Einbringung des Hilfsdrehmoments beziehungsweise der Hilfskraft kann mit der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eine mit dem Lenkrad 102 verbundene Eingangswelle 10 und eine mit der Zahnstage 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann beispielsweise über einen Drehwinkelsensor gemessen werden und entsprechend aufgrund der bekannten Torsionssteifigkeit des Drehstabes in ein entsprechendes Eingangsdrehmoment relativ zur Ausgangswelle bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise in Form eines Drehschiebeventils, einer elektromagnetischen oder anderen Messung der Relativverdrehung realisiert werden.

Entsprechend wird ein Drehmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 hervorrufen, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder eine einzutragende Hilfskraft bestimmen zu können.

Die Lenkwelle 1 in der Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann.

In Figur 2 ist eine Lenkwelle 1 in einer schematischen perspektivischen Darstellung gezeigt. Die Lenkwelle 1 umfasst ein erstes Wellenteil 2, welches hier in Form einer Innenwelle dargestellt ist, und ein zweites Wellenteil 3, welches hier in Form einer Außenwelle dargestellt ist. Der erste Wellenteil 2 ist gegenüber dem zweiten Wellenteil 3 in Teleskopierrichtung X teleskopierbar, wobei sich die Teleskopierrichtung X in Richtung der Wellenachse 1000 der Lenkwelle 1 erstreckt.

In Figur 3 ist die Lenkwelle 1 aus Figur 2 in einer auseinandergezogenen Darstellung gezeigt. Es ist zu erkennen, dass der erste Wellenteil 2 einen Verzahnungsbereich 20 aufweist, welcher mit einer Vielzahl an Zähnen 200 versehen ist, welche sich in Richtung der Achse 1000 der Lenkwelle 1 erstrecken.

Der erste Wellenteil 2 kann in den zweiten Wellenteil 3 eingeführt und wieder aus diesem herausgezogen werden und auf diese Weise teleskopiert werden. Gleichzeitig dient der Verzahnungsbereich 20 dazu, mit dazu komplementären Strukturen in einer Ausnehmung 30 in dem zweiten Wellenteil 3 so in Eingriff zu kommen, dass eine Drehmomentübertragung ermöglicht ist. Um ein komplettes Herausziehen des ersten Wellenteils 2 aus dem zweiten Wellenteil 3 nach der Montage zu verhindern, kann eine Auszugssicherung, wie zum Beispiel eine Verstemmung 31, vorgesehen sein.

Der Verzahnungsbereich 20 des ersten Wellenteils 2 ist in Figur 3 schematisch in zwei unterschiedlichen Ausführungen gezeigt. Der erste Verzahnungsbereich 20 weist zwei unterschiedliche Verzahnungsabschnitte 22 auf, zwischen welchen eine Nut 24 ausgebildet ist, die die beiden Verzahnungsabschnitte 22 trennt. Die beiden Verzahnungsabschnitte 22 können damit unterschiedlich ausgebildet sein. Insbesondere kann ein Verzahnungsabschnitt 22 die nachfolgend beschriebenen Führungselemente, bevorzugt in Kombination mit den nachfolgend beschriebenen Übertragungselementen aufweisen, der andere Verzahnungsabschnitt 22 jedoch nur Übertragungselemente. Die beiden Verzahnungsabschnitte 22 können jedoch auch identisch ausgeführt sein. In einer Alternative ist der Verzahnungsbereich 20' gezeigt, welcher einen einzigen, durchgehenden Verzahnungsabschnitt 22 aufweist, welcher entsprechend sowohl Führungselemente als auch Übertragungselemente aufweist.

Der zweite Wellenteil 3 weist eine Ausnehmung 30 und auf seiner Innenseite eine Verzahnungsstruktur auf, welche im Wesentlichen komplementär ist zu den Verzahnungsbereichen 20 des ersten Wellenteils 2. Die Verzahnungsstruktur ermöglicht die Übertragung eines Drehmoments, beeinträchtigt aber die Teleskopierbarkeit nicht.

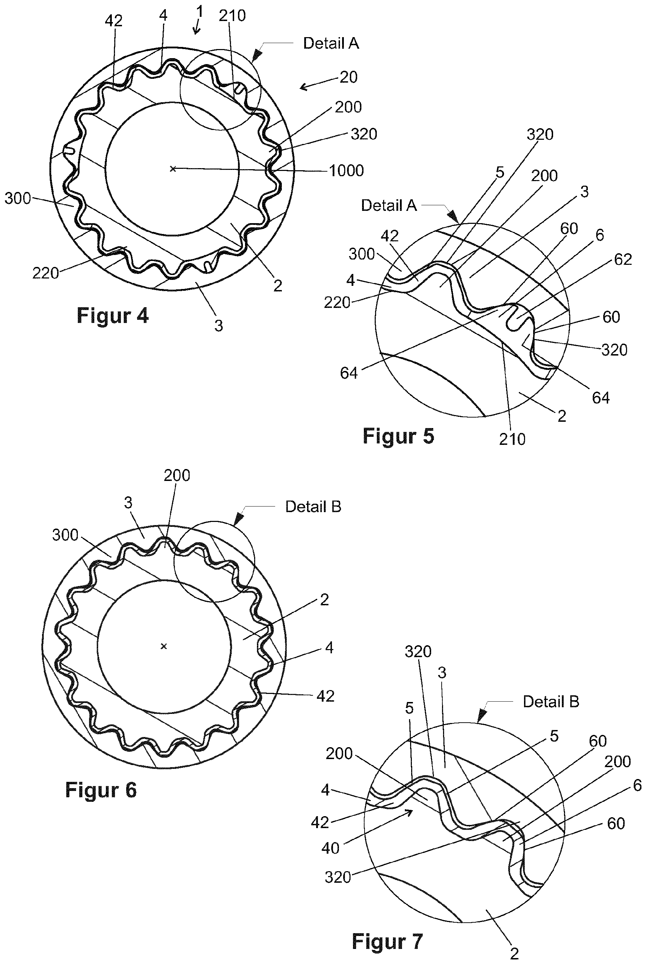

Diese Ausführungsform ist noch einmal in den Figuren 4 und 5 gezeigt, welche Querschnittdarstellungen durch eine Lenkwelle 1 im Verzahnungsbereich zeigen. Der Verzahnungsbereich 20 des ersten Wellenteils 2 ist hier mit einer Verzahnung mit Zähnen 200 und dazwischen liegenden Ausnehmungen 220 ausgebildet, wobei sich um den Umfang des Verzahnungsbereiches 20 herum die Geometrie der Zähne 200 nicht unterscheidet. Entsprechend sind sämtliche Zähne 200 identisch ausgebildet und im Wesentlichen regelmäßig um den Umfang des ersten Wellenteils 2 herum angeordnet. Es sind jedoch drei Fehlzähne 210 vorgesehen, bei welchen kein Zahn 200 ausgebildet ist. Die drei Fehlzähne 210 sind jeweils in einem Drehwinkel von 120° zueinander angeordnet.
Der zweite Wellenteil 3 weist ebenfalls eine Verzahnung mit Zähnen 300 auf, zwischen denen entsprechende Ausnehmungen 320 angeordnet sind. Die Zähne 300 und die Ausnehmungen 320 sind auf der Innenseite des zweiten Wellenteils 3 vorgesehen. Entsprechend greifen die Zähne 200 des ersten Wellenteils 2 in dazu komplementäre Ausnehmungen 320 des zweiten Wellenteiles 3 ein. Die Zähne 300 des zweiten Wellenteils 3 greifen entsprechend in dazu komplementäre Ausnehmungen 220 des ersten Wellenteils 2 ein.

Wie sich aus der Figur 4 und der Detaildarstellung aus Figur 5 ergibt, besteht zwischen dem ersten Wellenteil 2 und dem zweiten Wellenteil 3 ein loser Formschluss. Entsprechend findet beim Aufbringen eines Drehmoments auf beispielsweise das zweite Wellenteil 3 zunächst eine Relativverdrehung zwischen dem ersten Wellenteil 2 und dem zweiten Wellenteil 3 statt, bis die jeweiligen Zähne 200, 300 an jeweiligen Ausnehmungen 220, 320 zur Anlage kommen. Beim entsprechenden Zurückrotieren würde dann aufgrund des losen Formschlusses zunächst wieder eine Relativbewegung zwischen dem ersten Wellenteil 2 und dem zweiten Wellenteil 3 stattfinden, bis wiederum sämtliche Zähne 200, 300 an den jeweiligen Ausnehmungen 220, 320 beziehungsweise deren Flanken anliegen.

Der erste Wellenteil 2 und der zweite Wellenteil 3 sind bevorzugt aus einem Metall hergestellt, beispielsweise durch Umformen oder spanende Verfahren, so dass eine sichere Übertragung eines Drehmoments stattfinden kann, nachdem der durch den losen Formschluss ausgebildete Luftspalt durch ein Teil des wirkenden Drehmoments und der daraus resultierenden Relativverdrehung zwischen dem ersten Wellenteil 2 und dem zweiten Wellenteil 3 überwunden wurde.

Der Verzahnungsbereich 20 des ersten Wellenteils 2 ist mit einer Umspritzung 4 aus einem Kunststoff versehen, welche im Bereich der Zähne 200 und der Ausnehmungen 220 eine Beschichtung 42 mit einer im Wesentlichen konstanten Dicke ausbildet.

Wie sich insbesondere aus Figur 5 ergibt, ist im Bereich der Zähne 200, 300 und den jeweils dazu komplementären Ausnehmungen 220, 320 auch bei Vorliegen der Beschichtung 42 ein Luftspalt 5 ausgebildet, derart, dass auch trotz der Umspritzung 4 im Bereich der Zähne 200 ein loser Formschluss zwischen dem ersten und dem zweiten Wellenteil vorliegt.

Die mit der Umspritzung 4 versehenen Zähne 200 im Verzahnungsbereich 20 sind als Übertragungselemente 40 vorgesehen, welche nach Überwinden des Luftspaltes 5 durch eine entsprechende Relativverdrehung zwischen dem ersten Wellenteil 2 und dem zweiten Wellenteil 3 mit einer Flanke der dazu jeweils komplementären Struktur des zweiten Wellenteils in Kontakt kommen, und auf diese Weise eine Drehmomentübertragung mit einer hohen Verdrehsteifigkeit ermöglichen.

Im Bereich der Fehlzähne 210 bildet die Umspritzung 4 ein Führungselement 6 aus. Die Umspritzung 4 bildet entsprechend die Führungselemente 6 und die Beschichtung 42 im Verzahnungsbereich 20 des ersten Wellenteils 2 aus.

Das Führungselement 6 ist größer dimensioniert, als die Zähne 200 in Kombination mit der Beschichtung 42. Das Führungselement 6 liegt damit im montierten Zustand derart formschlüssig an der Ausnehmung 320 des zweiten Wellenteils 3 an, dass ein linienförmiger Anlagebereich 60 ausgebildet ist, welcher an beiden Flanken des Führungselements 6 vorliegt. Entsprechend steht das erste Wellenteil 2 mit dem zweiten Wellenteil 3 über das Führungselement 6 in formschlüssiger Verbindung. Je nach Dimensionierung des Führungselementes 6 kann so eine spielarme oder spielfreie Verbindung zwischen dem ersten Wellenteil 2 und dem zweiten Wellenteil 3 erreicht werden.

Das Führungselement 6 weist in dem gezeigten Ausführungsbeispiel in seinem Zahnkopfbereich weiterhin eine Ausnehmung 62 so auf, dass zwei federnde Flanken 64 ausgebildet werden, welche, wie vorher beschrieben, in den linienförmigen Anlagebereichen 60 an den dazu komplementären Strukturen, beispielsweise den Ausnehmungen 320, am zweiten Wellenteil 3 anliegen. Durch die Ausbildung der Ausnehmung 62 im Zahnkopfbereich kann dieser entsprechend so federnd ausgebildet werden, dass, beispielsweise auch bei einer geringen Überdimensionierung des Führungselementes 6, stets eine Vorspannung derart aufgebracht werden kann, dass ein spielfreier Sitz des ersten Wellenteils 2 gegenüber dem zweiten Wellenteil 3 erreicht wird. Entsprechend nimmt ein Fahrer beim Drehen des Lenkrades nicht wahr, dass zunächst das Führungselement 6 leicht elastisch deformiert wird, bis die Übertragungselemente 40 des ersten Wellenteils 2 in Anlage mit den jeweiligen dazu komplementären Strukturen des zweiten Wellenteils 3 kommen, um so eine sichere Drehmomentübertragung mit einer hohen Verdrehsteifigkeit zu erreichen.

Dadurch, dass sowohl die Beschichtung 42 als auch das Führungselement 6 im Verzahnungsbereich 20 auf den metallischen Grundkörper des ersten Wellenteils 2 aufgespritzt werden, ist eine einfache Herstellung sowohl der Führungselemente 6 als auch der Beschichtung 42 zu erreichen. Die auf diese Weise ausgebildete Lenkwelle 1 ist entsprechend vorteilhaft herzustellen, bietet aber gleichzeitig ein bevorzugtes Verschiebeverhalten in Teleskopierrichtung X, da im lastfreien Zustand lediglich die Führungselemente 6 des ersten Wellenteils 2 mit dem zweiten Wellenteil 3 in direktem Kontakt entlang der linienförmigen Abschnitte 60 stehen, die Übertragungselemente 40 mit deren Beschichtung 42 jedoch nicht in Kontakt mit dem zweiten Wellenteil 3, so dass eine reibungsarme und einfache Verschiebbarkeit der beiden Wellenteile 2, 3 gegeneinander bereitgestellt wird.

Zum Übertragen eines Drehmoments kommen jedoch sämtliche Übertragungselemente 40 in Form der Zähne 200, 300 in Kombination mit der Beschichtung 42 so in Anlage mit den jeweiligen Ausnehmungen 200, 300, dass ein verdrehsteifes und sicheres Übertragen des Drehmoments ermöglicht ist.

In Figuren 6 und 7 ist ein weiteres Ausführungsbeispiel gezeigt, bei welchem der Verzahnungsbereich 20 des ersten Wellenteils 2 wiederum mit einer Umspritzung 4 versehen ist, welche eine Beschichtung 42 mit unterschiedlichen Dicken ausbildet.

Das erste Wellenteil 2 weist im Verzahnungsbereich 20 wiederum um seinen Umfang herum eine Vielzahl von Zähnen 200 auf, die regelmäßig angeordnet sind und die alle eine gleiche Geometrie aufweisen. Entsprechend ist das erste Wellenteil 2 einfach auf herkömmliche Weise herstellbar. Auch das zweite Wellenteil 3 weist eine Vielzahl von Zähnen 300 auf, welche ebenfalls die gleiche Geometrie aufweisen.

Die Umspritzung 4 ist im Bereich der Übertragungselemente 40 wiederum als Beschichtung 42 auf den Zähnen 200 des ersten Wellenteiles 2 mit einer solchen Dicke ausgebildet, dass ein Luftspalt 5 zwischen dem Übertragungselement 40 und der jeweiligen dazu korrespondierenden Struktur, beispielsweise der Ausnehmung 320, des zweiten Wellenteiles 3 ausgebildet ist. Mit anderen Worten bilden die Übertragungselemente 40 des ersten Wellenteils 2 wieder einen losen Formschluss mit dem zweiten Wellenteil 3 aus.

Im Bereich der Führungselemente 6 weist die Beschichtung 42 der Zähne 200 hingegen eine solche Dicke auf, dass die solcherart ausgebildeten Führungselement 6 formschlüssig mit den dazu komplementären Strukturen des zweiten Wellenteils 3 in Eingriff stehen. Die Geometrie der Führungselemente 6 ist hier durch die entsprechende Formgebung der Beschichtung 42 so ausgebildet, dass ein linienförmiger Anlagebereich 60 an der entsprechenden Ausnehmung 320 des zweiten Wellenteils 3 ausgebildet ist. Auf diese Weise wird wiederum die Ausbildung einer formschlüssigen und im Wesentlichen spielfreien Verbindung zwischen dem ersten Wellenteil 2 und dem zweiten Wellenteil 3 erreicht.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Lenkwelle
- 10: Eingangswelle
- 12: Ausgangswelle
- 100: Kraftfahrzeuglenkung
- 102: Lenkrad
- 104: Lenkritzel
- 106: Zahnstange
- 108: Spurstange
- 110: lenkbares Rad
- 112: Hilfskraftunterstützung
- 114: Hilfskraftunterstützung
- 116: Hilfskraftunterstützung
- 118: Drehmomentsensor
- 118': Drehmomentsensor
- 120: kardanisches Gelenk
- 1000: Wellenachse
- 2: erster Wellenteil
- 20, 20': Verzahnungsbereich
- 22: Verzahnungsabschnitt
- 24: Nut
- 200: Zahn
- 210: Fehlzahn
- 220: Ausnehmung
- 3: zweiter Wellenteil
- 30: zylinderförmige Ausnehmung
- 31: Verstemmung
- 300: Zahn
- 320: Ausnehmung
- 4: Umspritzung
- 40: Übertragungselement
- 42: Beschichtung
- 5: Luftspalt
- 6: Führungselement
- 60: linienförmiger Anlagebereich
- 62: Ausnehmung
- 64: elastische Flanke
- X: Teleskopierrichtung

## Patentansprüche

1. Lenkwelle (1) für ein Kraftfahrzeug, umfassend einen ersten Wellenteil (2) und einen gegenüber diesem teleskopierbaren zweiten Wellenteil (3), wobei der erste Wellenteil (2) mindestens einen Verzahnungsbereich (20) mit mindestens einem mit dem zweiten Wellenteil (3) formschlüssig in Eingriff stehenden Führungselement (6) zum Führen des ersten Wellenteils (2) gegenüber dem zweiten Wellenteil (3) beim Teleskopieren und mit mindestens einem mit dem zweiten Wellenteil (3) über einen losen Formschluss in Eingriff stehenden Übertragungselement (40) zum Übertragen eines Drehmoments aufweist, wobei der Verzahnungsbereich (20) zumindest teilweise mit einem Kunststoff umspritzt ist und das Führungselement (6) in der Umspritzung (4) ausgebildet ist,
**dadurch gekennzeichnet,**
**dass** der Verzahnungsbereich (20) eine Verzahnung mit Zähnen (200) gleicher Geometrie aufweist, wobei mindestens ein Fehlzahn (210) vorgesehen ist, an dessen Position das Führungselement (6) durch die Umspritzung (4) ausgebildet ist.

2. Lenkwelle (1) gemäß Anspruch 1, **dadurch gekennzeichnet, dass** der Verzahnungsbereich (20) ein Metall aufweist und der Kunststoff ein elastischer Kunststoff ist.

3. Lenkwelle (1) gemäß Anspruch 1 oder 2, **dadurch gekennzeichnet, dass** der Verzahnungsbereich (20) um den Umfang des ersten Wellenteils (2) herum mit dem Kunststoff umspritzt ist.

4. Lenkwelle (1) gemäß einem der vorstehenden Ansprüche, **dadurch gekennzeichnet, dass** im Verzahnungsbereich (20) des ersten Wellenteils (2) eine gleichmäßige Verzahnung mit Zähnen (200) gleicher Geometrie vorgesehen ist und mindestens ein Zahn (200) zur Ausbildung mindestens eines Führungselements (6) mit der Umspritzung (4) versehen ist.

5. Lenkwelle (1) gemäß Anspruch 4, **dadurch gekennzeichnet, dass** durch die Umspritzung (4) der regelmäßige Verzahnung eine Beschichtung (42) des Verzahnungsbereichs (20) ausgebildet ist, wobei die Beschichtung (42) im Bereich mindestens eines Führungselements (6) dicker ausgebildet ist, als im Bereich mindestens eines Übertragungselements (40).

6. Lenkwelle (1) gemäß einem der vorstehenden Ansprüche, **dadurch gekennzeichnet, dass** das Führungselement (6) in seinem Zahnkopfbereich eine sich in Richtung der Wellenachse (1000) des ersten Wellenelements (2) erstreckende Ausnehmung (62) zur Ausbildung von federnden Flanken (64) zur elastischen Anlage des Führungselements (6) an einer komplementären Struktur (300, 320) des zweiten Wellenteils (3) aufweist.

7. Lenkwelle (1) gemäß einem der vorstehenden Ansprüche, **dadurch gekennzeichnet, dass** zwischen dem ersten Wellenteil (2) und dem zweiten Wellenteil (3) ein loser Formschluss zur Übertragung eines Drehmoments auch bei Fortfall der Umspritzung (4) ausgebildet ist.

8. Lenkwelle (1) gemäß einem der vorstehenden Ansprüche, **dadurch gekennzeichnet, dass** das Führungselement (6) eine Oberflächengeometrie zur Ausbildung von Punktkontakten oder eine Oberflächengeometrie zur Ausbildung von Linienkontakten mit einer komplementären Struktur (300, 320) des zweiten Wellenelements (3) aufweist.

9. Lenkwelle (1) gemäß einem der vorstehenden Ansprüche, **dadurch gekennzeichnet, dass** mindestens zwei, drei oder vier Führungselemente (6) gleichmäßig um den Umfang des Verzahnungsbereichs (20) herum angeordnet sind und zwischen zwei Führungselementen (6) jeweils mindestens ein Übertragungselement (40) angeordnet ist.

## Claims

1. Steering shaft (1) for a motor vehicle, comprising a first shaft part (2) and a second shaft part (3) that is telescopable with respect to the former, wherein the first shaft part (2) comprises at least one spline region (20) with at least one guide element (6) which is in form-fit engagement with the second shaft part (3) for guiding the first shaft part (2) relative to the second shaft part (3) during the telescoping and with at least one transmission element (40) which is in engagement with the second shaft part (3) via a loose form-fit for transmitting a torque, wherein the spline region (20) is at least partially overmolded with a plastic and the guide element (6) is formed in the overmolding (4), **characterized**
**in that** the spline region (20) comprises a spline system with splines (200) of the same geometry, wherein at least one missing spline (210) is provided, in the position of which the guide element (6) is formed by the overmolding (4).

2. Steering shaft (1) according to Claim 1, **characterized in that** the spline region (20) comprises a metal and the plastic is an elastic plastic.

3. Steering shaft (1) according to Claim 1 or 2, **characterized in that** the spline region (20) is overmolded with the plastic about the circumference of the first shaft part (2).

4. Steering shaft (1) according to any one of the preceding claims, **characterized in that** in the spline region (20) of the first shaft part (2) a uniform spline system with splines (200) of the same geometry is provided and at least one spline (200) for forming at least one guide element (6) is provided with the overmolding (4).

5. Steering shaft (1) according to Claim 4, **characterized in that** through the overmolding (4) of the regular spline system a coating (42) of the spline region (20) is formed, wherein the coating (42) in the region of at least one guide element (6) is formed thicker than in the region of at least one transmission element (40).

6. Steering shaft (1) according to any one of the preceding claims, **characterized in that** the guide element (6) in its spline head region comprises a recess (62) which extends in the direction of the shaft axis (1000) of the first shaft element (2) for forming resilient flanks (64) for the guide element (6) elastically lying against a complementary structure (300, 320) of the second shaft part (3).

7. Steering shaft (1) according to any one of the preceding claims, **characterized in that** between the first shaft part (2) and the second shaft part (3) a loose form-fit for transmitting a torque even in the absence of the overmolding (4) is formed.

8. Steering shaft (1) according to any one of the preceding claims, **characterized in that** the guide element (6) comprises a surface geometry for forming point contacts or a surface geometry for forming line contacts with a complementary structure (300, 320) of the second shaft element (3) .

9. Steering shaft (1) according to any one of the preceding claims, **characterized in that** at least two, three or four guide elements (6) are arranged evenly about the circumference of the spline region (20) and between two guide elements (6) at least one transmission element (40) is arranged in each case.

## Revendications

1. Colonne de direction (1) pour un véhicule automobile, comprenant une première partie de colonne (2) et une deuxième partie de colonne (3) télescopable par rapport à celle-ci, la première partie de colonne (2) présentant au moins une région de denture (20) avec au moins un élément de guidage (6) en prise par engagement positif avec la deuxième partie de colonne (3) pour le guidage de la première partie de colonne (2) par rapport à la deuxième partie de colonne (3) lors du télescopage et comprenant au moins un élément de transfert (40) en prise par engagement positif lâche avec la deuxième partie de colonne (3) pour transférer un couple, la région de denture (20) étant au moins en partie surmoulée avec un plastique et l'élément de guidage (6) étant réalisé dans le surmoulage (4),
**caractérisée en ce que**
la région de denture (20) présente une denture avec des dents (200) de géométrie identique, au moins une dent imparfaite (210) étant prévue, au niveau de laquelle l'élément de guidage (6) est réalisé par le surmoulage (4).

2. Colonne de direction (1) selon la revendication 1, **caractérisée en ce que** la région de denture (20) présente un métal et le plastique est un plastique élastique.

3. Colonne de direction (1) selon la revendication 1 ou 2, **caractérisée en ce que** la région de denture (20) est surmoulée avec le plastique tout autour de la périphérie de la première partie de colonne (2) .

4. Colonne de direction (1) selon l'une quelconque des revendications précédentes, **caractérisée en ce que** dans la région de denture (20) de la première partie de colonne (2) est prévue une denture uniforme avec des dents (200) de géométrie identique et au moins une dent (200) est pourvue du surmoulage (4) pour la réalisation d'au moins un élément de guidage (6).

5. Colonne de direction (1) selon la revendication 4, **caractérisée en ce qu'**un revêtement (42) de la région de denture (20) est réalisé par le surmoulage (4) de la denture régulière, le revêtement (42) étant réalisé dans la région d'au moins un élément de guidage (6) sous forme plus épaisse que dans la région d'au moins un élément de transfert (40).

6. Colonne de direction (1) selon l'une quelconque des revendications précédentes, **caractérisée en ce que** l'élément de guidage (6) présente, dans sa région de tête de dent, un évidement (62) s'étendant dans la direction de l'axe de colonne (1000) du premier élément de colonne (2) pour réaliser des flancs élastiques (64) pour l'application élastique de l'élément de guidage (6) contre une structure complémentaire (300, 320) de la deuxième partie de colonne (3).

7. Colonne de direction (1) selon l'une quelconque des revendications précédentes, **caractérisée en ce qu'**entre la première partie de colonne (2) et la deuxième partie de colonne (3) est réalisé un engagement positif lâche pour le transfert d'un couple également en cas de suppression du surmoulage (4).

8. Colonne de direction (1) selon l'une quelconque des revendications précédentes, **caractérisée en ce que** l'élément de guidage (6) présente une géométrie de surface pour réaliser des contacts ponctuels ou une géométrie de surface pour réaliser des contacts linéaires avec une structure complémentaire (300, 320) du deuxième élément de colonne (3).

9. Colonne de direction (1) selon l'une quelconque des revendications précédentes, **caractérisée en ce qu'**au moins deux, trois ou quatre éléments de guidage (6) sont répartis uniformément autour de la périphérie de la région de denture (20) et à chaque fois au moins un élément de transfert (40) est disposé entre deux éléments de guidage (6).
